Europäisches Patentamt

European Patent Office

Office européen des brevets

(19)

(11) Veröffentlichungsnummer : **0 478 540 B1**

# (12) EUROPÄISCHE PATENTSCHRIFT

(45) Veröffentlichungstag der Patentschrift :
**07.09.94 Patentblatt 94/36**

(51) Int. Cl.$^5$: **G01D 5/245**, G01B 7/30,
G01P 3/44

(21) Anmeldenummer : **89906729.2**

(22) Anmeldetag : **19.06.89**

(86) Internationale Anmeldenummer :
**PCT/DE89/00405**

(87) Internationale Veröffentlichungsnummer :
**WO 90/15968 27.12.90 Gazette 90/29**

(54) **VERFAHREN ZUR ERZEUGUNG EINER DREHZAHLPROPORTIONALEN SPANNUNG MIT EINEM RESOLVER UND SCHALTUNGSANORDNUNG ZUR DURCHFÜHRUNG DES VERFAHRENS.**

(43) Veröffentlichungstag der Anmeldung :
**08.04.92 Patentblatt 92/15**

(45) Bekanntmachung des Hinweises auf die
Patenterteilung :
**07.09.94 Patentblatt 94/36**

(84) Benannte Vertragsstaaten :
**CH DE FR GB IT LI SE**

(56) Entgegenhaltungen :
**DE-A- 2 729 697**
**DE-A- 3 218 101**
**DE-C- 2 942 080**

(56) Entgegenhaltungen :
**Elektronik Industrie, Dezember 1985, (Heidelberg, DE), Manfred Karcher: "R/D-Wandler im Vergleich zu Winkelcodierern und Tachogeneratoren", Seite 54**

(73) Patentinhaber : **SIEMENS AKTIENGESELLSCHAFT Wittelsbacherplatz 2 D-80333 München (DE)**

(72) Erfinder : **DONAT, Albrecht Büchenbacher Anlage 5 D-8520 Erlangen (DE)**
Erfinder : **SCHWESIG, Günter Lange Zeile 84 D-8520 Erlangen (DE)**

EP 0 478 540 B1

## Beschreibung

Die Erfindung bezieht sich auf ein Verfahren zur Erzeugung einer drehzahlproportionalen Spannung mit einem Resolver, wobei das Vorzeichen der drehzahlproportionalen Spannung der Drehrichtung des Resolvers entspricht und wobei an den beiden Resolverausgängen zwei um 90° el. phasenverschobene weg- bzw. winkelabhängige amplitudenmodulierte Sinusspannungen abnehmbar sind, deren Amplituden in Abhängigkeit der Rotorlage bzw. des Drehwinkels modulierbar sind und auf eine Schaltungsanordnung zur Durchführung des Verfahrens.

Für Werkzeugmaschinenantriebe kommen in zunehmendem Maße bürstenlose Vorschub- und Hauptspindelantriebe zum Einsatz. Die Drehzahl- und die Rotorlageerfassung soll ebenfalls bürstenlos erfolgen. Dazu werden optische und magnetische Inkrementalgeber, Drehstromtachomaschinen und Resolver (Drehmelder) eingesetzt. Für eine hohe Positioniergenauigkeit (Lageregelkreis) ist für den unterlagerten Drehzahlregelkreis einer Steuer- und Regeleinheit eines Vorschubs- und/oder Hauptspindelantriebs eine hohe Drehzahlauflösung erforderlich. Es kann bereits mit optischen Inkrementalgebern eine kleinste erfaßbare Drehzahl von < 0,01 $min^{-1}$ erfaßt werden. Ein solcher Inkrementalgeber liefert beispielsweise 1.000 bis 20.000 Sinus/Cosinus-Perioden pro mechanischer Umdrehung. Mit einer entsprechenden Vervielfachungsschaltung kann dann eine Lageauflösung von beispielsweise 60 Mio. Positionen pro mechanischer Umdrehung erreicht werden. Bei einer digitalen Drehzahlregelung mit einer Abtastzeit von 1 msec. wird die Drehzahl aus der Differenz zweier Rotorlagen bezogen auf die Abtastzeit berechnet, wobei bei der angegebenen Abtastzeit und der Auflösung eine Drehzahl von 0,01 $min^{-1}$ erfaßt werden kann.

Aus der Zeitschrift "Elektronik Industrie" 12 - 1985, Seiten 50 bis 54, ist ein Resolver/Digital-Umsetzer bekannt, der aus den beiden Resolverspannungen einen digitalen Winkelwert durch ein Nachlaufverfahren erzeugt. Dabei bilden ein phasenempfindlicher Demodulator, ein Integrator und ein spannungsgesteuerter Oszillator eine geschlossene Regelschleife, in der ständig der analoge Eingangswinkel mit dem digitalen Analogwert verglichen wird. Die Auflösung beträgt bis zu 16 Bit pro Umdrehung und die Winkelinformation kann direkt von einem Mikroprozessor abgefragt werden. Durch die Verwendung eines 16 Bit-Digital-Analog-Wandlers findet die Verarbeitung der Resolverspannungen im Mikrovoltbereich statt.

Aus der DE 32 18 101 C2 ist eine Auswerteeinrichtung für einen digitalen Inkrementalgeber bekannt, bei dem an den Geberausgängen zwei um 90° el. phasenverschobene weg- bzw. winkelabhängige Sinusspannungen gleicher Amplitude und Periode abnehmbar sind, die in eine dem zurückgelegten Weg bzw. Winkel proportionale Zahl von Impulsen umsetzbar sind, wobei ferner eine aus einer Sinusspannung abgeleitete Spannung in einen Digitalwert umsetzbar ist. Linearweg- bzw. winkelabhängige Abschnitte der Sinusspannungen im Bereich der Nulldurchgänge werden zu einer periodischen Dreieckspannung elektrisch zusammengefügt, deren Grundschwingungsfrequenz ein ganzzahliges Vielfaches der Frequenz einer Sinusspannung ist. Die Amplitude der erzeugten Dreieckspannung hat einen linearen Zusammenhang zur Position innerhalb einer jeden Achtelperiode des Gebers. Durch Analog-Digital-Wandlung und Verknüpfung mit Komparatorsignalen, die die richtige Achtelperiode auswählen, wird die Unterteilung der Geberperiode erleichtert.

Wenn anstelle eines optischen Gebers ein Resolver für die Drehzahl- und Rotorlageerfassung zum Einsatz kommt, weil gegenüber einem optischen Geber der Resolver kostengünstiger, robuster, ein kleineres Bauvolumen aufweist und bei einem höheren Temperaturbereich einsetzbar ist, muß die um mehrere Zehnerpotenzen niedrigere Grundinformation des Resolvers gegenüber einem optischen Geber mittels einer aufwendigen und kostspieligen Auswerteschaltung ausgewertet werden. Diese Auswerteschaltungen enthalten meisten teuere 16 Bit-Analog-Digital- bzw. Digital-Analog-Wandler, wobei die Verarbeitung im Mikrovoltbereich zusätzliche Kosten verursacht.

Der Erfindung liegt nun die Aufgabe zugrunde, ein kostengünstiges Verfahren zur Erfassung niedriger Drehzahlen, die mittels eines Resolvers gemessen werden, und eine Schaltungsanordnung zur Durchführung dieses erfindungsgemäßen Verfahrens anzugeben.

Diese Aufgabe wird erfindungsgemäß mit den Merkmalen des Anspruchs 1 gelöst.

Durch dieses Verfahren wird zunächst aus den beiden amplitudenmodulierten Sinusspannungen an den Ausgängen des Resolvers jeweils ein Amplitudensignal (Nutzsignal), dessen Amplitude von der Rotorlage bzw. dem Drehwinkel abhängig ist, erzeugt. D.h. die Resolversignale werden demoduliert. Aus den beiden Amplitudensignalen, die das Ergebnis der Demodulation der Resolversignale sind, wird eine drehzahlproportionale Spannung dadurch erzeugt, daß die Amplitudensignale jeweils in ein sinusförmiges Signal gewandelt werden, das in einem Bereich von ± 45° el. um den Nulldurchgang linear ist. Durch Differentiation dieser sinusförmigen Signale erhält man zwei trapezförmige Signale, deren Amplituden proportional zur Drehzahl sind. In Abhängigkeit der Rotorlage bzw. des Drehwinkels wird dann aus den trapezförmigen Signalen und den invertierten trapezförmigen Signalen eine drehzahlproportionale Spannung zusammengesetzt, deren Amplitude proportionale zur Drehzahl und das Vorzeichen dieser drehzahlproportionalen Spannung der Drehrichtung des

EP 0 478 540 B1

Resolvers entspricht. Somit kann man auch mit einem Resolver, dessen Grundinformation gegenüber optischen Inkrementalgebern um mehrere zehner Potenzen niedriger ist, eine Drehzahl < 0,01 $min^{-1}$ erfassen, ohne dabei teuere Analog-Digital- bzw. Digital-Analog-Wandler zu verwenden, die eine Verarbeitung im Mikrovoltbereich notwendig machen.

Weitere vorteilhafte Verfahren zur Erzeugung der Amplitudensignale (Nutzsignale) aus den beiden an den Resolverausgängen anstehenden um 90° el. phasenverschobenen amplitudenmodulierten Sinusspannungen, sind den abhängigen Ansprüchen 2 bis 4 zu entnehmen, die jeweils einen ersten Verfahrensschritt des erfindungsgemäßen Verfahrens bilden.

Eine erfindungsgemäße Schaltungsanordnung zur Durchführung des Verfahrens mit einem Resolver, der rotorseitig mit einer aus einem Funktionsgenerator erzeugten cosinusförmigen Erreger- spannung gespeist wird, ist dadurch gekennzeichnet, daß die Resolverausgänge und ein weiterer Ausgang des Funktionsgenerators mit einer Demodulationsschaltanordnung verknüpft sind, deren Ausgänge mit einer Schaltungsanordnung zur Erzeugung einer drehzahlproportionalen Spannung verbunden sind, die pro Resolverausgang einen Kennliniengeber mit nachgeschaltetem Differenzierer enthält, wobei die Ausgänge der Differenzierer einerseits direkt und andererseits jeweils über einen Inverter mit einem Multiplexer verbunden sind, dem ein Analog-Digital-Umsetzer nachgeschaltet ist, wobei dem Multiplexer an seinen Adreßeingängen Steuersignale zuführbar sind, die von der Rotorlage abhängen, und daß die Resolverausgänge mit einer Schaltungsanordnung zur Erzeugung eines Rotorlage-bzw. eines Drehwinkelsignals verbunden sind, wobei die Schaltungsanordnung ausgangsseitig einerseits mit einer Rechenschaltung und andererseits mit der Schaltungsanordnung zur Erzeugung einer drehzahlproportionalen Spannung verbunden ist, wobei der letzteren Schaltungsanordnung in einer Astdekodierlogik generierte Steuersignale zuführbar sind, die von der Rotorlage abhängen und die angeben, in welchem Winkelbereich sich der Rotor befindet. Dadurch kann man die Rotorlage bzw. den Drehwinkel des Resolvers ermitteln und aus der Differenz zweier Rotorlagen in Abhängigkeit einer Abtastzeit eines digitalen Drehzahlregelkreises mittels der Rechenschaltung jeweils die Drehzahl berechnen. Somit besteht eine Schaltungsanordnung, mit der man aus zwei Amplitudensignalen, gewonnen aus zwei amplitudenmodulierten Signalen abnehmbar an den beiden Resolverausgängen, auf zwei unterschiedliche Verfahren die Drehzahl des Drehgebers und die Rotorlage bzw. den Drehwinkel des Drehgebers erfassen kann. Dabei ist die Erfassung der Drehzahl mit der Schaltungsanordnung zur Erzeugung einer drehzahlproportionalen Spannung für niedrigere Drehzahlen vorgesehen und die Erfassung der Drehzahl mittels der Schaltungsanordnung zur Erzeugung einer Rotorlage für höhere Drehzahlen vorgesehen. Beide Schaltungsanordnungen sind derart aufgebaut, daß im Drehzahlband ein Überlappungsbereich existiert.

Vorteilhafte Ausführungsformen der Demodulationsschaltanordnung sind den abhängigen Ansprüchen 6 bis 8 zu entnehmen.

Zur weiteren Erläuterung der Erfindung wird auf die Zeichnung Bezug genommen, in der ein Ausführungsbeispiel der Schaltungsanordnung zur Durchführung des erfindungsgemäßen Verfahrens zur Erzeugung einer drehzahlproportionalen Spannung schematisch veranschaulicht ist.

| | |
|---|---|
| Figur 1 | zeigt eine Schaltungsanordnung zur Durchführung des erfindungsgemäßen Verfahrens, in den |
| Figuren 2 bis 4 | sind vorteilhafte Ausführungsformen der Demodulationsschaltanordnung nach Figur 1 dargestellt, die |
| Figur 5 | zeigt den Aufbau eines Funktionsgenerators, der die Erregerspannung des Resolvers erzeugt, in |
| Figur 6 | ist eine Schaltungsanordnung zur Erzeugung eines Rotorlage- bzw. eines Drehwinkelsignals dargestellt, |
| Figur 7 | veranschaulicht eine Schaltungsanordnung zur Erzeugung einer drehzahlproportionalen Spannung, die |
| Figuren 8 bis 15 | zeigen die Signalverläufe der vorteilhaften Ausführungsform der Demodulationsschaltanordnung nach Figur 2, wobei die Signale jeweils in einem Diagramm über dem Drehwinkel $\alpha$ dargestellt sind, die |
| Figuren 16 bis 21 | veranschaulichen die Signalverläufe der Schaltungsanordnung zur Erzeugung eines Rotorlage- bzw. Drehwinkelsignals nach Figur 6, wobei die Signale jeweils in einem Diagramm über dem Drehwinkel $\alpha$ dargestellt sind, und die |
| Figuren 22 bis 26 | stellen die Signalverläufe der Schaltungsanordnung zur Erzeugung einer drehzahlproportionalen Spannung nach Figur 7 dar, wobei die Signale jeweils in einem Diagramm über dem Drehwinkel $\alpha$ dargestellt sind. |

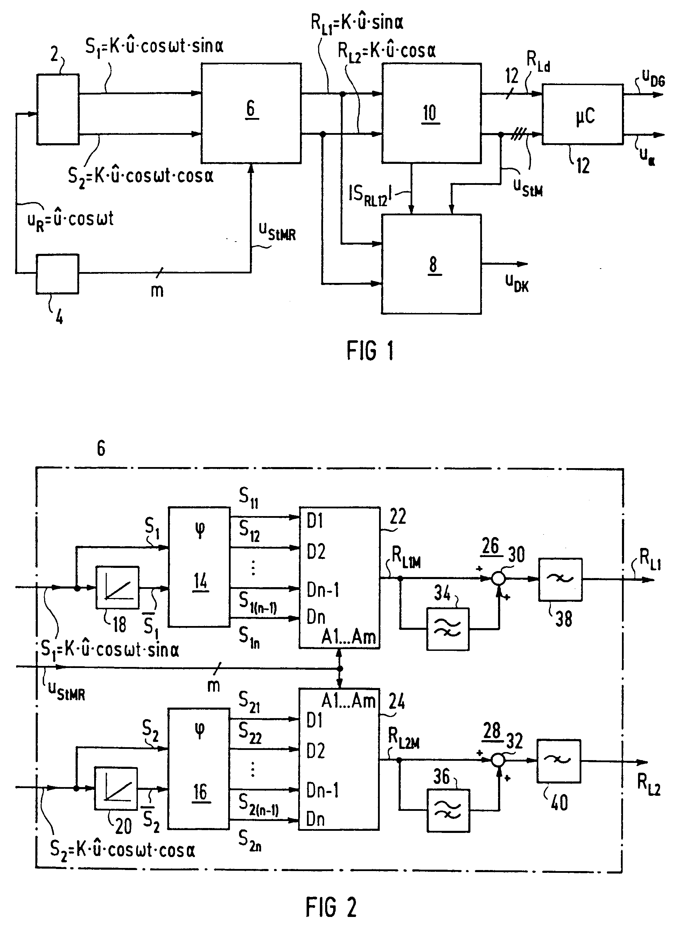

In Figur 1 ist eine Schaltungsanordnung zur Durchführung des erfindungsgemäßen Verfahrens zur Erzeugung einer drehzahlproportionalen Spannung $u_{DK}$ und $u_{DG}$ mit einem Resolver 2 dargestellt. Der Resolver 2 wird rotorseitig mit einer aus einem Funktionsgenerator 4 erzeugten cosinusförmigen Erregerspannung $u_R$

3

= û cosωt gespeist. Der Aufbau des Funktionsgenerators 4 ist in Figur 5 näher dargestellt. An den beiden Resolverausgängen sind zwei um 90° el. phasenverschobene weg- bzw. winkelabhängige amplitudenmodulierte Sinusspannungen $S_1$ = K·û·cosωt sinα und $S_2$ = K· û cos ωt·cosα abnehmbar, wobei K das Übersetzungsverhältnis des Resolvers 2 ist. Diese Sinusspannungen $S_1$ und $S_2$ sind einer Demodulationsschaltanordnung 6 zugeführt, die ausgangsseitig mit einer Schaltungsanordnung 8 zur Erzeugung einer drehzahlproportionalen Spannung $u_{DK}$ und andererseits mit einer Schaltungsanordnung 10 zur Erzeugung eines Rotorlage- bzw. Drehwinkelsignals $R_{Ld}$ verknüpft sind.

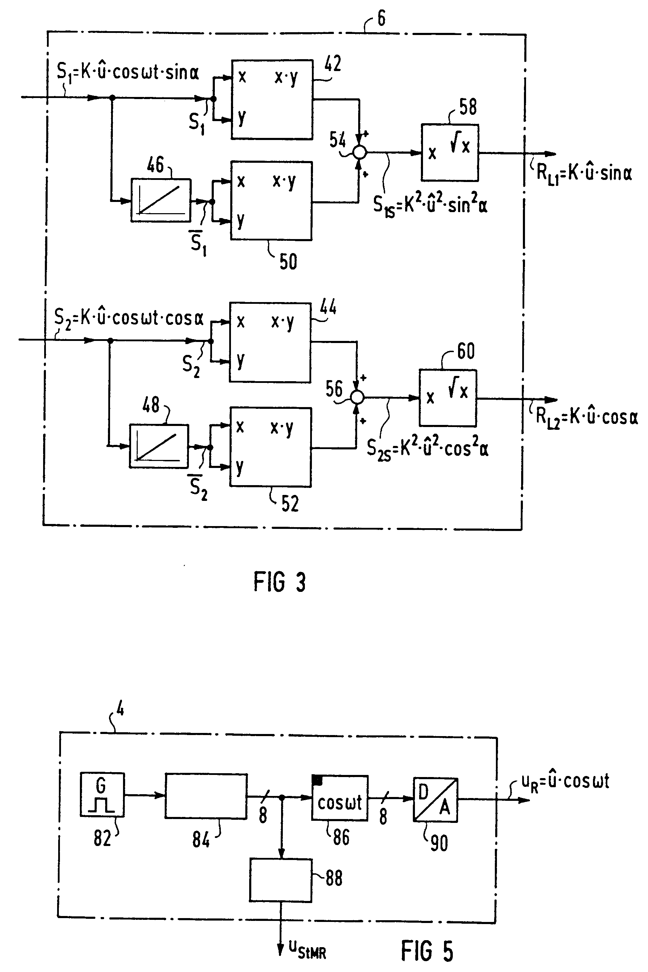

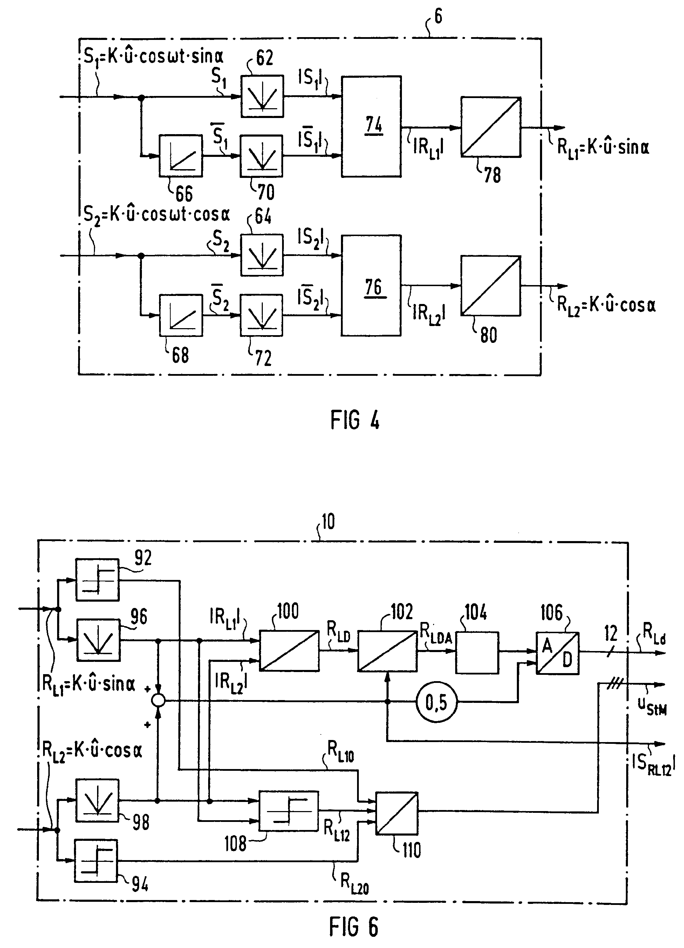

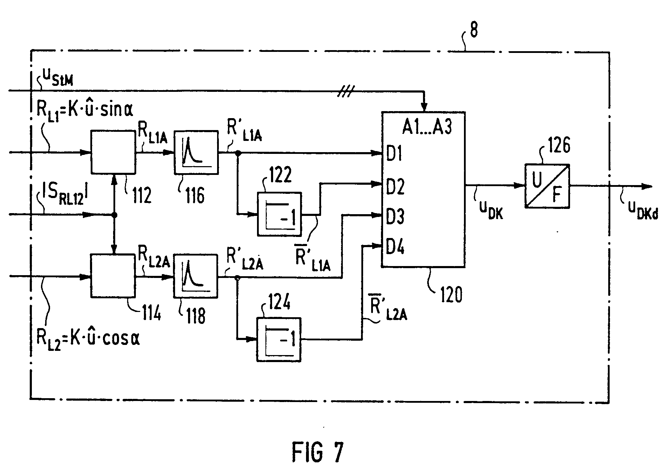

Die Demodulationsschaltanordnung 6 gewinnt aus den amplitudenmodulierten Sinusspannungen $S_1$ und $S_2$ zwei sinusförmige Amplitudensignale $R_{L1}$ = K·û·sinα und $R_{L2}$ = K·û·cosα , deren Amplituden sich in Abhängigkeit der Rotorlage bzw. des Drehwinkels ändern. Vorteilhafte Ausführungsformen der Demodulationsschaltanordnung 6 sind in den Figuren 2 bis 4 näher dargestellt. Mittels der Schaltungsanordnung 8, die in der Figur 7 näher beschrieben ist, wird eine drehzahlproportionale Spannung $u_{DK}$ erzeugt. Dabei wird dieser Schaltungsanordnung 8 noch zusätzlich der Betrag eines Summensignals $|S_{RL12}|$ und Steuersignale $u_{StM}$ zugeführt. Der Betrag des Summensignals $|S_{RL12}|$ und die Steuersignale $u_{StM}$ werden neben dem Rotorlage- bzw. dem Drehwinkelsignal $R_{Ld}$ von der Schaltungsanordnung 10 erzeugt, die in Figur 6 näher dargestellt und aus der europäischen Patentanmeldung mit dem Aktenzeichen 89105645.9 (EP-A- 390 936) bereits bekannt ist.

Eine Verarbeitungsschaltung 12, insbesondere ein Mikrorechner, die der Schaltungsanordnung 10 zur Erzeugung eines Rotorlagebzw. Drehwinkelsignals $R_{Ld}$ nachgeschaltet ist, berechnet aus dem Rotorlage- bzw. dem Drehwinkelsignal $R_{Ld}$ und den Steuersignalen $u_{StM}$ eine rotor- bzw. drehwinkelproportionale Spannung $u_{\alpha}$ und eine drehzahlproportionale Spannung $u_{DG}$. Diese drehzahlproportionale Spannung $u_{DG}$ wird in bekannter Weise aus der Differenz zweier Rotorlagen bezogen auf eine Abtastzeit berechnet.

Zur Erzeugung der sinusförmigen Amplitudensignale $R_{L1}$ und $R_{L2}$, auch Nutzsignale der Resolverausgangssignale $S_1$ und $S_2$ genannt, sind der Demodulationsschaltanordnung 6 Steuersignale $u_{StMR}$ zugeführt, die vom Funktionsgenerator 4 erzeugt werden.

Mittels dieser dargestellten Schaltungsanordnung ist es möglich, aus den amplitudenmodulierten Sinusspannungen $S_1$ und $S_2$ eines Resolvers 2 trotz des um mehrere zehner Potenzen niedrigeren Informationsgehaltes drehzahlproportionale Spannungen $u_{DK}$ und $u_{DG}$ zu erzeugen, die einer untere Drehzahl von 0,01 min$^{-1}$ entspricht. Anstelle des Resolvers 2 mit zugehöriger Demodulationsschaltanordnung 6 und dem Funktionsgenerator 4 können auch Inkrementalgeber oder Drehgeber verwendet werden, an deren Ausgänge zwei um 90° el. phasenverschobene sinusförmige Amplitudensignale $R_{L1}$ und $R_{L2}$ anstehen.

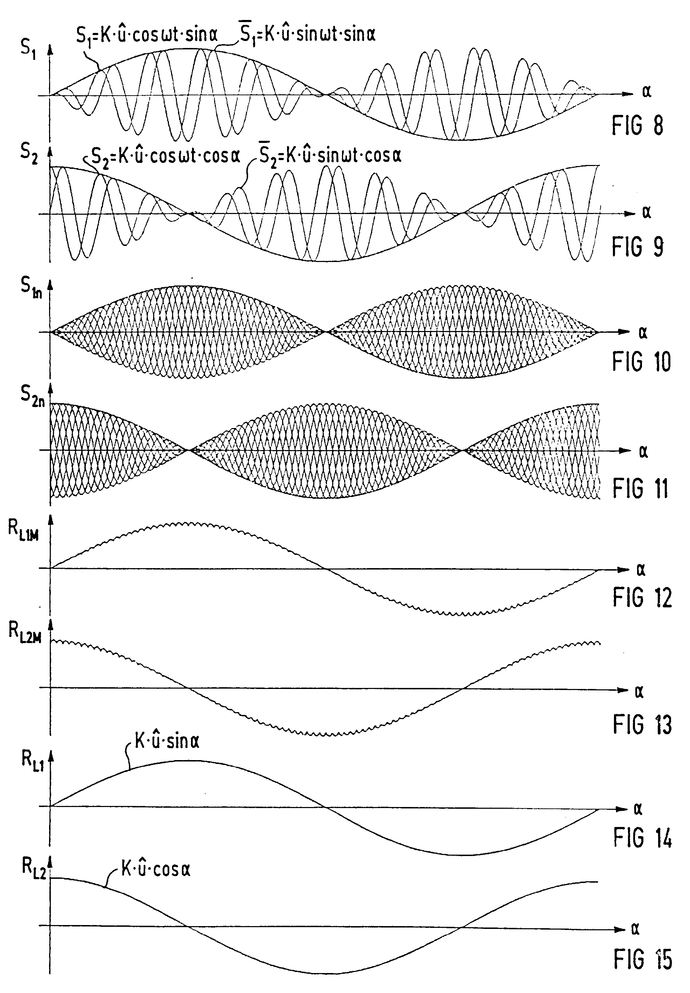

Die Figur 2 zeigt eine vorteilhafte Ausführungsform der Demodulationsschaltanordnung 6 der Figur 1. Diese Ausführungsform der Demodulationsschaltanordnung 6 ist zweikanalig ausgeführt, wobei diese Kanäle identisch aufgebaut sind. Jedem Kanal dieser Demodulationsschaltanordnung 6 ist ein Resolverausgangssignal $S_1$ bzw. $S_2$ zugeführt. Dieses Signal $S_1$ bzw. $S_2$ wird einem Phasenschieber 14 bzw. 16 direkt und über einen Integrator 18 bzw. 20 zugeführt. Somit stehen an den Eingängen des Phasenschiebers 14 bzw. 16 die amplitudenmodulierte Sinusspannung $S_1$ bzw. $S_2$ und die integrierte, amplitudenmodulierte Sinusspannung $\overline{S}_1$ bzw. $\overline{S}_2$ an. Die Sinusspannung $S_1$ und $\overline{S}_1$ bzw. $S_2$ und $\overline{S}_2$ sind in einem Diagramm über dem Drehwinkelα in der Figur 8 bzw. 9 dargestellt. Der Phasenschieber 14 bzw. 16 erzeugt an seinen Ausgängen n phasenverschobene Sinusspannungen $S_{11}$, $S_{12}$, ..., $S_{1(n-1)}$, $S_{1n}$ bzw. $S_{21}$, $S_{22}$, ..., $S_{2(n-1)}$, $S_{2n}$. Je größer die Zahl n ist, umso kleiner wird die Welligkeit der mittels des nachgeschalteten Multiplexers 22 bzw. 24 erzeugten sinusförmigen Hüllkurve $R_{L1M}$ bzw. $R_{L2M}$. Dabei sind die n phasenverschobenen Sinusspannungen $S_{11}$, $S_{12}$, ..., $S_{1n}$ bzw. $S_{21}$, $S_{22}$, ..., $S_{2n}$ mit den Dateneingängen D1, D2, ..., Dn des Multiplexers 22 bzw. 24 verknüpft, wobei an den Adreßeingängen Al, ..., Am Steuersignale $u_{StMR}$ anstehen. Die n phasenverschobenen Sinusspannungen $S_{11}$, $S_{12}$, ..., $S_{1n}$ bzw. $S_{21}$, $S_{22}$, ..., $S_{2n}$ sind in einem Diagramm über dem Drehwinkel in der Figur 10 bzw. 11 dargestellt. Ebenfalls ist die erzeugte Hüllkurve $R_{L1M}$ bzw. $R_{L2M}$, in einem Diagramm über dem Drehwinkel in der Figur 12 bzw. 13 aufgetragen. Mittels einer Filteranordnung 26 bzw. 28 wird die Welligkeit der Hüllkurve $R_{L1M}$ bzw. $R_{L2M}$ herausgefiltert, so daß an den Ausgängen der Demodulationsschalt- anordnung 6 zwei sinusförmige Amplitudensignale $R_{L1}$ und $R_{L2}$ anstehen, die jeweils in einem Diagramm über dem Drehwinkel in den Figuren 14 und 15 dargestellt sind. Die Filteranordnung 26 bzw. 28 besteht aus einem Addierer 30 bzw. 32, dem eingangsseitig die Hüllkurve $R_{L1M}$ bzw. $R_{L2M}$ direkt und über einen Hochpaß 34 bzw. 36 zugeführt sind. Ausgangsseitig ist der Addierer 30 bzw. 32 mit einem Besselfilter 38 bzw. 40 verknüpft, wobei das Besselfilter 38 bzw. 40 n-ter Ordnung, vorzugsweise dritter Ordnung, ist.

In Figur 3 ist eine weitere vorteilhafte Ausführungsform der Demodulationsschaltanordnung 6 nach Figur 1 dargestellt. Auch diese Ausführungsform der Demodulationsschaltanordnung 6 ist zweikanalig ausgeführt, wobei beide Kanäle identisch aufgebaut sind. Jedem Kanal dieser Demodulationsschaltanordnung 6 ist ein Resolverausgangssignal $S_1$ bzw. $S_2$ zugeführt. Diese amplitudenmodulierte Sinusspannung $S_1$ bzw. $S_2$ wird einerseits direkt einem ersten Multiplizierer 42 bzw. 44, der als Quadrierer geschaltet ist, und andererseits über einen Integrator 46 bzw. 48 einem zweiten Multiplizierer 50 bzw. 52, der ebenfalls als Quadrierer. geschaltet ist, zugeführt. Da die Zeitkonstante T des Integrators 46 bzw. 48, wie bei der Ausführungsform gemäß Figur 2, gleich $1/\omega$ ist, stehen an den beiden Eingängen des zweiten Multiplizierers 50 bzw. 52 die integrierte amplitudenmodulierte Sinusspannung $\overline{S}_1 = K \cdot \hat{u} \cdot \sin\omega\, t \cdot \sin\alpha$ bzw. $\overline{S}_2 = K \cdot \hat{u} \cdot \cos\omega\, t \cdot \cos\alpha$ an. Die Ausgangsspannungen der beiden Multiplizierer 42 und 50 bzw. 44 und 52 werden addiert, wobei am Ausgang des Addierers 54 bzw. 56 aufgrund der trigonometrischen Formel $\sin^2 + \cos^2 = 1$ der Trägerfrequenzanteil $\cos\omega\, t + \sin\omega t$ eliminiert ist, so daß die Summenspannung $S_{1S} = K^2 \cdot \hat{u}^2 \cdot \sin^2\alpha$ bzw. $S_{2S} = K^2 \cdot \hat{u}^2 \cdot \cos^2\omega$ ansteht. Diese Summenspannung $S_{1S}$ bzw. $S_{2S}$ wird einem nachgeschalteten Radizierer 58 bzw. 60 mit Umformerstufe zugeführt, an dessen Ausgang das sinusförmige Amplitudensignal $R_{L1}$ bzw. $R_{L2}$ gemäß der Figur 14 bzw. 15 ansteht.

In Figur 4 ist eine weitere vorteilhafte Ausführungsform der Demodulationsschaltanordnung 6 nach Figur 1 dargestellt. Auch diese Ausführungsform der Demodulationsschaltanordnung 6 ist zweikanalig ausgeführt, wobei beide Kanäle identisch aufgebaut sind. Jedem Kanal dieser Demodulationsschaltanordnung 6 ist ein Resolverausgangssignal $S_1$ bzw. $S_2$ zugeführt. Diese amplitudenmodulierte Sinusspannung $S_1$ bzw. $S_2$ wird einerseits über einen Betragsbildner 62 bzw. 64 und andererseits über einer Integrator 66 bzw. 68 mit nachgeschaltetem Betragsbildner 70 bzw. 72 einem Vektoranalysator 74 bzw. 76 zugeführt. Dadurch stehen an den beiden Eingängen des Vektoranalysators 74 bzw. 76 der Betrag der amplitudenmodulierten Sinusspannung $|S_1|$ bzw. $|S_2|$ und der Betrag der integrierten amplitudenmodulierten Sinusspannung $|\overline{S}_1|$ bzw. $|\overline{S}_2|$ an. Der Vektoranalysator 74 bzw. 76 ist in der DE 31 20 319 C2, insbesondere der Figur 5 mit zugehörigem Text, dargestellt und beschrieben. Der Vektoranalysator 74 bzw. 76 ermittelt den Betrag $|R_{L1}|$ bzw. $|R_{L2}|$ eines aus den Beträgen $|S_1|$ bzw. $|S_2|$ und $|\overline{S}_1|$ bzw. $|\overline{S}_2|$ gebildeten Zeigers. Dieser Betrag $|R_{L1}|$ bzw. $|R_{L2}|$ wird mittels eines Umsetzers 78 bzw. 80 in ein sinusförmiges Amplitudensignal $R_{L1}$ bzw. $R_{L2}$ umgewandelt, welches das Nutzsignal des Resolverausgangssignals $S_1$ bzw. $S_2$ ist.

Mittels dieser Ausführungsformen der Demodulationsschaltanordnung 6 kann man aus den amplitudenmodulierten Sinusspannungen $S_1$ und $S_2$ des Resolvers 2 jeweils die sinusförmigen Amplituden signale $R_{L1}$ und $R_{L2}$, d.h. die Nutzsignale, gewinnen, ohne dabei teure, hochauflösende Wandler zu verwenden, die eine notwendige Verarbeitung im Mikrovoltbereich verursachen, die empfindlich gegen Störung ist. Somit erhält man robuste Demodulationsschaltanordnungen 6 für einen robusten Resolver 2, ohne dabei die Nachteile des um mehrere zehner Potenzen niedrigeren Grundinformationsgehaltes in Kauf nehmen zu müssen.

In Figur 5 ist der Aufbau eines Funktionsgenerators 4 dargestellt, der die cosinusförmige Erregerspannung $u_R = \hat{u} \cos\omega\, t$ erzeugt. Ein Generator 82 liefert Taktsignale an einen Zähler 84. Der Ausgang des Zählers 84 ist einerseits mit einem Speicher 86, in dem eine Cosinusfunktion abgespeichert ist, und andererseits mit einem Dekoder 88 verknüpft. Dem Speicher 86 ist ein Digital-Analog-Wandler 90 nachgeschaltet, an dessen Ausgang die Erregerspannung $u_R$ ansteht. Der Dekoder 88 erzeugt in Abhängigkeit der Zahl n des Phasenschiebers 14 bzw. 16 der Figur 2 m Steuersignale $u_{StMR}$ für die Adreßeingänge A1 bis Am für den Multiplexer 22 bzw. 24 der Demodulationsschaltanordnung 6 nach Figur 2.

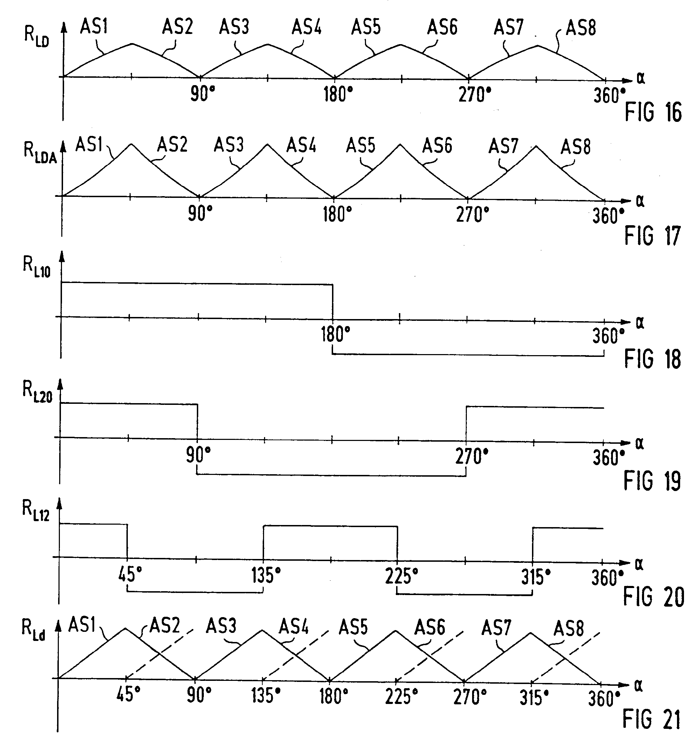

In Figur 6 ist eine Schaltungsanordnung 10 zur Erzeugung eines Rotorlage- bzw. Drehwinkelsignals $R_{Ld}$ dargestellt. Diese Schaltungsanordnung 10, die näher beschrieben ist in der europäischen Patentanmeldung mit dem Aktenzeichen 89105645.9 (EP-A-390 936), weist eingangsseitig für jedes Resolverausgangssignal $S_1$ bzw. $S_2$ eine Schwellwertstufe 92 bzw. 94 und einen Betragsbildner 96 bzw. 98 auf. Die Ausgänge der Betragsbildner 96 und 98 werden einerseits zum Summensignal $|S_{RL12}|$ addiert und andererseits einem Umsetzer 100 zugeführt, der jeweils das kleinere der beiden Beträge der Amplitudensignale $|R_{L1}|$ und $|R_{L2}|$ an seinen Ausgang als Signal $R_{LD}$ durchschaltet. Dieses Signal $R_{LD}$ ist in einem Diagramm über dem Drehwinkel $\alpha$ in der Figur 16 dargestellt. Die einzelnen Äste AS1 bis AS8 dieses Signals $R_{LD}$ weisen jeweils eine ab- bzw. zunehmende veränderbare Steigung auf. Mittels eines Kennlinienapproximations-Bildners 102, dem als Referenzspannung das Summensignal $|S_{RL12}|$ zugeführt wird, wird ein approximiertes Signal $R_{LDA}$ erzeugt, das in einem Diagramm über dem Drehwinkel $\alpha$ in der Figur 17 näher dargestellt ist. Die einzelnen Äste AS1 bis AS8 dieses approximierten Signals $R_{LDA}$ weisen jeweils zu-bzw. abnehmende veränderbare Steigungen auf. Ein derartiger Kennlinienapproximations-Bildner 102 ist beispielsweise aus "Meßelektronik" von Horst Germer und Norbert Wefers, Bd.1, 1985, Seiten 186 bis 192, bekannt. Das approximierte Signal $R_{LDA}$ wird mittels eines Sample and Hold-Gliedes 104 und eines Analog-Digital-Wandlers 106 digitalisiert, Der Analog-Digital-Wandler 106 erhält als Referenzsignal die Hälfte des Summensignals $|S_{RL12}|$. Das digitale Ausgangssignal $R_{Ld}$ ist in einem Diagramm über dem Drehwinkel $\alpha$ in der Figur 21 dargestellt, wobei die einzelnen Äste AS1 bis AS8 linear verlaufen. Bedingt durch die Referenzspannung $|S_{RL12}|$ für den Kennlinienaproximations-Bildner 102 und dem Referenzsignal $1/2\ |S_{RL12}|$ für den Analog-Digital-Wandler 106 muß aus dem Signal $R_{LD}$ ein approximiertes Signal $R_{LDA}$ gebildet werden, damit das digitale Signal $R_{Ld}$ am Ausgang der Schaltungsanordnung 10 entstehen kann.

Die Ausgänge der Betragsbildner 96 und 98 werden ebenfalls einer weiteren Schwellwertstufe 108 zugeführt, die stets dann ein entsprechendes Ausgangssignal $R_{L12}$ generiert, wenn $|R_{L2}| < |R_{L1}|$ ist. Dieses Aus-

5

gangssignal $R_{L12}$ ist in einem Diagramm über dem Drehwinkel$\alpha$ in der Figur 20 dargestellt. Die Ausgangssignale $R_{L10}$ und $R_{L20}$ sind ebenfalls jeweils in einem Diagramm über dem Drehwinkel$\alpha$ in den Figuren 18 und 19 dargestellt. Diese Ausgangssignale $R_{L10}$, $R_{L20}$ und $R_{L12}$ sind einer Astdekodierlogik 110 zugeführt, die diese Ausgangssignale mittels dreier Bits darstellt, die als Steuersignale $u_{StM}$ am Ausgang der Astdekodierlogik 110 anstehen. Mittels dieser Steuersignale $u_{StM}$ und einer nichtdargestellten Verarbeitungsschaltung können die Äste AS1 bis AS8 des Rotorlage- bzw. Drehwinkelsignals $R_{Ld}$ zu einer linear ansteigenden Geraden zusammengesetzt werden, die eine rotorlage- bzw. drehwinkelproportionale Spannung $u_\alpha$ darstellt.

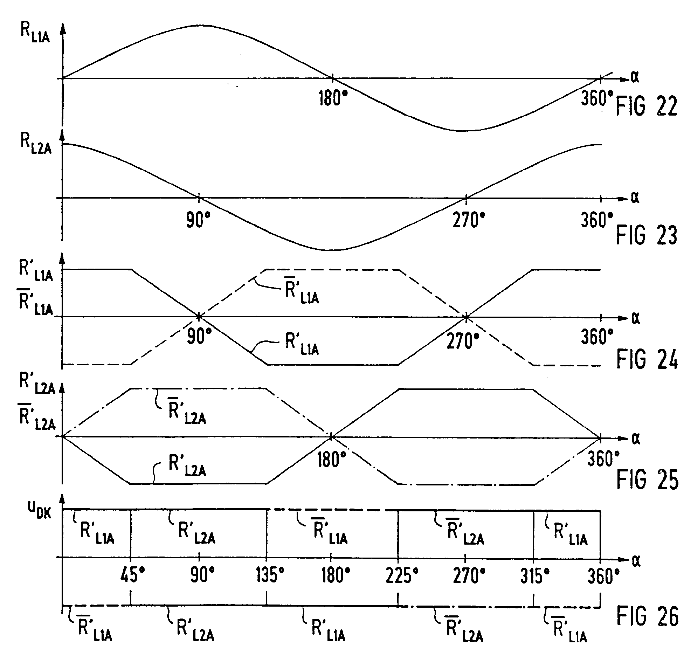

In der Figur 7 ist eine Schaltungsanordnung 8 zur Erzeugung einer drehzahlproportionalen Spannung $u_{DKd}$ dargestellt. Diese Schaltungsanordnung 8 weist eingangsseitig für jedes sinusförmige Amplitudensignal $R_{L1}$ bzw. $R_{L2}$ einen Kennliniengeber 112 bzw. 114 auf, dem ein Differenzierer 116 bzw. 118 nachgeschaltet ist. Der Kennliniengeber 112 bzw. 114 wandelt das eingangsseitige sinusförmige Amplitudensignal $R_{L1}$ bzw. $R_{L2}$ in ein approximiertes, sinusförmiges Amplitudensignal $R_{L1A}$ bzw. $R_{L2A}$ um, das in einem Bereich von $\pm\,45°$ um den Nulldurchgang linear ist. Dieses approximierte Amplitudensignal $R_{L1A}$ bzw. $R_{L2A}$ ist in einem Diagramm über dem Drehwinkel$\alpha$ in der Figur 22 bzw. 23 aufgetragen. Ein derartiger Kennliniengeber 112 bzw. 114 ist beispielsweise aus "Meßelektronik" von Horst Germer und Norbert Wefers, Band 1, 1985, Seiten 186 bis 192 bekannt. Dieses erzeugte approximierte Amplitudensignal $R_{L1A}$ bzw. $R_{L2A}$ wird anschließend differenziert. Das differenzierte Signal $R'_{L1A}$ bzw. $R'_{L2A}$ ist in einem Diagramm über dem Drehwinkel in der Figur 24 bzw. 25 dargestellt. Diese differenzierten Signale $R'_{L1A}$ und $R'_{L2A}$ werden einem Multiplexer 120 direkt und jeweils über einen Inverter 122 und 124 zugeführt. Die invertierten, differenzierten Signale $R'_{L1A}$ und $R'_{L2A}$ sind ebenfalls in dem Diagramm der Figur 24 bzw. 25 dargestellt. Außerdem werden den Adreßeingängen die Steuersignale $u_{StM}$ der Astdekodierlogik 110 der Schaltungsanordnung 10 nach Figur 6 zugeführt. In Abhängigkeit dieser Steuersignale $u_{StM}$ werden die an den Dateneingängen anstehenden Signale derart durchgeschaltet, daß am Ausgang des Multiplexers 120 eine drehzahlproportionale Spannung $u_{DK}$ ansteht, die in einem Diagramm über dem Drehwinkel$\alpha$ in der Figur 26 dargestellt ist.

Falls eine digitale Drehzahlregelung für einen Vorschub- bzw. Hauptspindelantrieb vorgesehen ist, kann diese drehzahlproportionale Spannung $u_{DK}$ mittels eines Spannungs-Frequenz-Wandlers 126 oder eines Analog-Digital-Wandlers digitalisiert werden.

Da diese Schaltungsanordnung 8 für die Erfassung kleinster Drehzahlen vorgesehen ist, kann durch die Dimensionierung der Differenzierer der Drehzahlbereich eingestellt werden, in dem die Auswertung der Amplitudensignale $R_{L1}$ und $R_{L2}$ mittels dieser Schaltungsanordnung 8 sinnvoll ist. Mittels der Schaltungsanordnung 10 und über die Differenz zweier Rotorlagen bezogen auf eine Abtastzeit werden die Drehzahlen ermittelt, die außerhalb des Drehzahlbereichs der Schaltungsanordnung 8 liegen. Damit die Drehzahl kontinuierlich erfaßt werden kann, weisen die beiden Drehzahlerfassungen einen Überlappungsbereich auf.

## Patentansprüche

1. Verfahren zur Erzeugung einer drehzahlproportionalen Spannung ($u_{DK}$) mit einem Resolver (2), wobei das Vorzeichen der drehzahlproportionalen Spannung ($u_{DK}$) der Drehrichtung des Resolvers (2) entspricht und wobei an den beiden Resolverausgängen zwei um 90° el. phasenverschobene weg- bzw. winkelabhängige amplitudenmodulierte Sinusspannungen ($S_1$, $S_2$) abnehmbar sind, deren Amplituden in Abhängigkeit der Rotorlage bzw. des Drehwinkels ($\alpha$) modulierbar sind, **dadurch gekennzeichnet,** daß in einer Einrichtung nach Art einer Demodulationsschaltung (6) aus den beiden amplitudenmodulierten Sinusspannungen ($S_1$, $S_2$) jeweils ein von der Rotorlage bzw. dem Drehwinkel ($\alpha$) abhängiges sinusförmiges Amplitudensignal ($R_{L1}$, $R_{L2}$) gewonnen wird, daß diese sinusförmigen Amplitudensignale ($R_{L1}$, $R_{L2}$) jeweils mittels Einrichtungen nach Art eines Kennliniengebers (112,114) in ein approximiertes, sinusförmiges Signal ($R_{L1A}$, $R_{L2A}$ gewandelt werden, das in einem Bereich von $\pm\,45°$ um den Nulldurchgang linear ist, daß jedes approximierte, sinusförmige Signal ($R_{L1A}$, $R_{L2A}$) differenziert und anschließend invertiert wird und daß aus den beiden differenzierten Signalen ($R'_{L1A}$, $R'_{L2A}$) und den beiden invertierten, differenzierten Signalen ($\overline{R}'_{L1A}$, $\overline{R}'_{L2A}$) eine analoge drehzahlproportionale Spannung ($u_{DK}$) in Abhängigkeit einer ermittelten Rotorlage ($\alpha$) zusammengesetzt wird, indem in einer Astkodierlogik Steuersignale erzeugt werden, die darüber Aufschluß geben, in welchem Winkelbereich sich der Rotor befindet und indem diese Steuersignale einer Einrichtung nach Art eines Multiplexers zugeführt werden, an deren Ausgang die drehzahlproportionale Spannung ($u_{DK}$) ansteht.

2. Verfahren nach Anspruch 1, **dadurch gekennzeichnet,** daß aus den amplitudenmodulierten Sinusspannungen ($S_1$, $S_2$) jeweils eine integrierte, amplitudenmodulierte Sinusspannung ($\overline{S}_1$, $\overline{S}_2$) erzeugt wird und

daß aus jeweils der amplitudenmodulierten und der integrierten, amplitudenmodulierten Sinusspannung ($S1$, $\overline{S}_1$ bzw. $S_2$, $\overline{S}_2$) n phasenverschobene Sinusspannungen ($S_{11}$, $S_{12}$, ..., $S_{1n}$ bzw. $S_{21}$, $S_{22}$, ..., $2_n$) entstehen, aus denen dann die Amplitudensignale ($R_{L1}$ bzw. $R_{L2}$) herausgefiltert werden.

3. Verfahren nach Anspruch 1, **dadurch gekennzeichnet**, daß aus den amplitudenmodulierten Sinusspannungen ($S_1$, $S_2$) jeweils eine integrierte, amplitudenmodulierte Sinusspannung ($\overline{S}_1$, $\overline{S}_2$) erzeugt wird und daß die amplitudenmodulierte und die integrierte, amplitudenmodulierte Sinusspannung ($S_1$, $\overline{S}_1$ bzw. $S_2$, $\overline{S}_2$) quadriert und zu einem Summensignal ($S_{1S}$ bzw. $S_{2S}$) summiert werden, aus dem durch radizieren das Amplitudensignal ($R_{L1}$ bzw. $R_{L2}$) erzeugt wird.

4. Verfahren nach Anspruch 1, **dadurch gekennzeichnet**, daß aus den amplitudenmodulierten Sinusspannungen ($S_1$, $S_2$) jeweils eine integrierte amplitudenmodulierte Sinusspannung ($\overline{S}_1$, $\overline{S}_2$) erzeugt werden, daß die amplitudenmodulierte und die integrierte, amplitudenmodulierte Sinusspannung ($S_1$, $\overline{S}_1$ bzw. $S_2$, $\overline{S}_2$) jeweils gleichgerichtet worden und daß diese gleichgerichteten Sinusspannungen ($|S_1|$, $|\overline{S}_1|$ bzw. $|S_2|$, $|\overline{S}_2|$) einem Vektoranalysator (74 bzw. 76) zuführbar sind, der daraus ein gleichgerichtetes Amplitudensignal ($|R_{L1}|$ bzw. $|R_{L2}|$) erzeugt, das in das Amplitudensignal ($R_{L1}$ bzw. $R_{L2}$) umgesetzt wird.

5. Schaltungsanordnung zur Durchführung des Verfahrens nach Anspruch 1 mit einem Resolver (2), der rotorseitig mit einer aus einem Funktionsgenerator (4) erzeugten cosinusförmigen Erregerspannung ($u_R$) gespeist wird, **dadurch gekennzeichnet**, daß die Resolverausgänge und ein weiterer Ausgang des Funktionsgenerators (4) mit einer Demodulations- schaltanordnung (6) verknüpft sind, deren Ausgänge mit einer Schaltungsanordnung (8) zur Erzeugung einer drehzahlproportionalen Spannung ($u_{DK}$) verbunden sind, die pro Resolverausgang einen Kennliniengeber (112, 114) mit nachgeschaltetem Differenzierer (116, 118) enthält, wobei die Ausgänge der Differenzierer (116, 118) einerseits direkt und andererseits jeweils über einen Inverter (122, 124) mit einem Multiplexer (120) verbunden sind, dem ein Analog-Digital-Umsetzer nachgeschaltet ist, wobei dem Multiplexer (120) an seinen Adreßeingängen Steuersignale zuführbar sind, die von der Rotorlage abhängen, und daß die Resolverausgänge mit einer Schaltungsanordnung (10) zur Erzeugung eines Rotorlage-bzw. eines Drehwinkelsignals ($R_{Ld}$) verbunden sind, wobei die Schaltungsanordnung (10) ausgangsseitig einerseits mit einer Rechenschaltung (12) und andererseits mit der Schaltungsanordnung (8) zur Erzeugung einer drehzahlproportionalen Spannung ($u_{DK}$) verbunden ist, wobei der letzteren Schaltungsanordnung (8) in einer Astdekodierlogik generierte Steuersignale ($u_{StM}$) zuführbar sind, die von der Rotorlage abhängen und die angeben, in welchem Winkelbereich sich der Rotor befindet.

6. Schaltungsanordnung nach Anspruch 5, **dadurch gekennzeichnet**, daß die Demodulationsschaltanordnung (6) pro Resolverausgang einen Integrator (18, 20), einen Phasenschieber (14, 16), einen Multiplexer (22, 24) und eine Filteranordnung (26, 28) enthält, wobei der Phasenschieber (14, 16) eingangsseitig einerseits über den Integrator (18, 20) und andererseits direkt mit dem Resolverausgang verbunden ist, wobei seine n Ausgänge mit dem Multiplexer (22, 24), dessen Ausgang mit der Filteranordnung (26, 28) verknüpft ist, verbunden sind.

7. Schaltungsanordnung nach Anspruch 5, **dadurch gekennzeichnet**, daß die Demodulationsschaltanordnung (6) pro Resolverausgang einen Integrator (46, 48), zwei Multiplizierer (42, 50; 44, 52), einen Addierer (54, 56) und einen Radizierer (58, 60) aufweist, wobei der erste Multiplizierer (42, 44) direkt und der zweite Multiplizierer (50, 52) mittels eines Integrators (46, 48) mit dem Resolverausgang verknüpft sind und wobei die Ausgänge der beiden Multiplizierer (42, 50; 44, 52) mit dem Addierer (54, 56) verbunden sind, der ausgangsseitig mit dem Radizierer (58, 60) verknüpft ist.

8. Schaltungsanordnung nach Anspruch 5, **dadurch gekennzeichnet**, daß die Demodulationsschaltanordnung (6) pro Resolverausgang einen Integrator (66, 68), zwei Betragsbildner (62, 70; 64, 72), einen Vektoranalysator (74, 76) und einen Umsetzer (78, 80) aufweist, wobei der erste Betragsbildner (62, 64) direkt und der zweite Betragsbildner (70, 72) mittels des Integrators (66, 68) mit dem Resolverausgang verknüpft sind und wobei die beiden Betragsbildner (62, 70; 64, 72) ausgangsseitig mit dem Vektoranalysator (74, 76), dem der Umsetzer (78, 80) nachgeschaltet ist, verbunden sind.

**Claims**

1. Method for generating a voltage ($u_{DK}$) proportional to rotational speed, having a resolver (2), wherein the sign of the voltage ($u_{DK}$) proportional to rotational speed corresponds to the direction of rotation of the resolver (2), and wherein two path-dependent or angle-dependent amplitude-modulated sinusoidal voltages ($S_1$, $S_2$) out of phase by 90° electrical, can be tapped at the two resolver outputs, the amplitudes of these sinusoidal voltages being capable of modulation in dependence upon the rotor position or the angle of rotation ($\alpha$), characterised in that, in a device in the style of a demodulation circuit (6), a respective sinusoidal amplitude signal ($R_{L1}$, $R_{L2}$) dependent upon the rotor position or the angle of rotation ($\alpha$), is obtained from the two amplitude-modulated sinusoidal voltages ($S_1$, $S_2$), in that these sinusoidal amplitude signals ($R_{L1}$, $R_{L2}$) are converted by means of devices in the style of a characteristic generator (112, 114) into a respective approximated sinusoidal signal ($R_{L1A}$, $R_{L2A}$) which is linear around the zero crossing in a range of ±45°, in that each approximated sinusoidal signal ($R_{L1A}$, $R_{L2A}$) is differentiated and subsequently inverted, and in that an analogue voltage ($u_{DK}$) proportional to rotational speed is formed from the two differentiated signals ($R'_{L1A}$, $R'_{L2A}$) and from the two inverted differentiated signals ($\overline{R}'_{L1A}$, $\overline{R}'_{L2A}$) in dependence upon a detected rotor position ($\alpha$), while control signals which give information concerning the angular range in which the rotor is located are generated in a branch decoding logic, and these control signals are supplied to a device in the style of a multiplexer, with the voltage ($u_{DK}$), which is proportional to rotational speed, being applied at the output of the said device.

2. Method according to claim 1, characterised in that a respective integrated amplitude-modulated sinusoidal voltage ($\overline{S}_1$, $\overline{S}_2$) is generated from the amplitude-modulated sinusoidal voltages ($S_1$, $S_2$), and in that n phase-displaced sinusoidal voltages ($S_{11}$, $S_{12}$, ..., $S_{1n}$ and $S_{21}$, $S_{22}$, ..., $2_n$, respectively) result from the respective amplitude-modulated and integrated amplitude-modulated sinusoidal voltages ($S_1$, $\overline{S}_1$ and $S_2$, $\overline{S}_2$, respectively), the amplitude signals ($R_{L1}$ and $R_{L2}$, respectively) then being filtered out of the said n phase-displaced sinusoidal voltages.

3. Method according to claim 1, characterised in that a respective integrated amplitude-modulated sinusoidal voltage ($\overline{S}_1$, $\overline{S}_2$) is generated from the amplitude-modulated sinusoidal voltages ($S_1$, $S_2$), and in that the amplitude-modulated and integrated amplitude-modulated sinusoidal voltages ($S_1$, $\overline{S}_1$ and ($S_2$, $\overline{S}_2$, respectively) are squared and summed to form a summation signal ($S_{1S}$ and $S_{2S}$, respectively), the amplitude signal ($R_{L1}$ and $R_{L2}$, respectively) being generated from this summation signal by means of square-root extraction.

4. Method according to claim 1, characterised in that a respective integrated amplitude-modulated sinusoidal voltage ($\overline{S}_1$, $\overline{S}_2$) is generated from the amplitude-modulated sinusoidal voltages ($S_1$, $S_2$), in that the respective amplitude-modulated and integrated amplitude-modulated sinusoidal voltages ($S_1$, $\overline{S}_1$ and $S_2$, $\overline{S}_2$, respectively) are rectified, and in that these rectified sinusoidal voltages ($|S_1|$, $|\overline{S}_1|$ and $|S_2|$, $|\overline{S}_2|$, respectively) can be supplied to a vector analyzer (74 and 76, respectively) which generates therefrom a rectified amplitude signal $|R_{L1}|$ and $|R_{L2}|$, respectively) which is converted into the amplitude signal ($R_{L1}$ and $R_{L2}$, respectively).

5. Circuit arrangement for implementing the method according to claim 1, having a resolver (2) which is fed by a cosinusoidal excitation voltage ($u_R$) generated from a function generator (4) on the rotor side, characterised in that the resolver outputs and a further output of the function generator (4) are linked to a demodulation switching arrangement (6), the outputs of which are connected to a circuit arrangement (8) for generating a voltage ($u_{DK}$) proportional to rotational speed, which arrangement comprises, per resolver output, a characteristic generator (112, 114) having a differentiator (116, 118) connected downstream, wherein the outputs of the differentiators (116, 118) are connected to a multiplexer (120), on the one hand directly and on the other hand by way of a respective inverter (122, 124), an analogue-to-digital converter being connected downstream to the said multiplexer, wherein control signals can be supplied to the multiplier (120) at its address inputs, which control signals are dependent upon the rotor position, and in that the resolver outputs are connected to a circuit arrangement (10) for generating a rotor-position or angle-of-rotation signal ($R_{Ld}$), wherein the circuit arrangement (10) is connected on the output side, on the one hand, to a computer circuit (12) and, on the other hand, to the circuit arrangement (8) for generating a voltage ($u_{DK}$) proportional to rotational speed, wherein control signals ($u_{StM}$) generated in a branch decoder logic, which control signals are dependent upon the rotor position and indicate the angular range in which the rotor is located, can be supplied to the latter circuit arrangement (8).

6. Circuit arrangement according to claim 5, characterised in that the demodulation switching arrangement (6) comprises, per resolver output, an integrator (18, 20), a phase shifter (14, 16), a multiplexer (22, 24) and a filter arrangement (26, 28), wherein the phase shifter (14, 16) is connected on the input side to the resolver output, on the one hand by way of the integrator (18, 20) and on the other hand directly, wherein its n outputs are connected to the multiplexer (22, 24) whose output is linked to the filter arrangement (26, 28).

7. Circuit arrangement according to claim 5, characterised in that the demodulation switching arrangement (6) has, per resolver output, an integrator (46, 48), two multipliers (42, 50; 44, 52), an adder (54, 56) and a root extractor (58, 60), wherein the first multiplier (42, 44) is linked directly to the resolver output and the second multiplier (50, 52) is linked to the resolver output by means of an integrator (46, 48), and wherein the outputs of the two multipliers (42, 50; 44, 52) are connected to the adder (54, 56) which is linked on the output side to the root extractor (58, 60).

8. Circuit arrangement according to claim 5, characterised in that the demodulation switching arrangement (6) has, per resolver output, an integrator (66, 68), two absolute-value generators (62, 70; 64, 72), a vector analyzer (74, 76) and a converter (78, 80), wherein the first absolute-value generator (62, 64) is linked directly to the resolver output and the second absolute-value generator (70, 72) is linked to the resolver output by means of the integrator (66, 68), and wherein the two absolute-value generators (62, 70; 64, 72) are connected on the output side to the vector analyzer (74, 76), to which the converter (78, 80) is connected downstream.

**Revendications**

1. Procédé pour produire une tension ($u_{DK}$), qui est proportionnelle à une vitesse de rotation, à l'aide d'un résolveur (2), selon lequel le signe de la tension ($u_{DK}$), qui est proportionnelle à la vitesse de rotation, correspond au sens de rotation du résolveur (2), et sur les deux sorties du résolveur peuvent être prélevées deux tensions sinusoïdales ($S_1$, $S_2$), qui sont modulées en amplitude, sont déphasées de 90° électriques et dépendent d'une distance parcourue ou d'un angle et dont les amplitudes peuvent être modulées en fonction de la position du rotor ou de l'angle de rotation ($\alpha$), caractérisé par le fait que, dans un dispositif réalisé à la manière d'un circuit de démodulation (6), respectivement un signal sinusoïdal d'amplitude ($R_{L1}$, $R_{L2}$) qui dépend de la position du rotor ou de l'angle de rotation ($\alpha$), est obtenu à partir des deux tensions sinusoïdales ($S_1$, $S_2$) modulées en amplitude, que ces signaux sinusoïdaux d'amplitude ($R_{L1}$, $R_{L2}$) sont convertis respectivement au moyen de dispositifs réalisés à la manière d'un générateur de courbes caractéristiques (112, 114), en un signal sinusoïdal approximé ($R_{L1A}$, $R_{L2A}$), qui est linéaire dans une gamme de ±45° autour du point de passage par zéro, que chaque signal sinusoïdal approximé ($R_{L1}$, $R_{L2}$) est différentié et est ensuite inversé, et qu'une tension analogique ($u_{DK}$), qui est proportionnelle à la vitesse de rotation, est formée à partir des deux signaux différentiés ($R'_{L1A}$, $R'_{L2A}$) et les deux signaux différentiés et inversés ($\overline{R}'_{L1A}$, $\overline{R}'_{L2A}$), en fonction d'une position déterminée ($\alpha$) du rotor, par le fait que des signaux logiques sont produits dans une logique de codage à ramifications, signaux qui donnent des indications sur la plage angulaire, dans laquelle se situe le rotor, et par le fait que ces signaux de codage sont envoyés à un dispositif réalisé à la manière d'un multiplexeur et à la sortie duquel est présente la tension ($u_{DK}$), qui est proportionnelle à la vitesse de rotation.

2. Procédé suivant la revendication 1, caractérisé par le fait que respectivement une tension sinusoïdale intégrée ($\overline{S}_1$, $\overline{S}_2$), qui est modulée en amplitude, est produite à partir de la tension sinusoïdale modulée en amplitude ($S_1$, $S_2$) et de la tension sinusoïdale intégrée modulée en amplitude ($\overline{S}_1$, $\overline{S}_2$), on obtient n tensions sinusoïdales déphasées ($S_{11}$, $S_{12}$, ... $S_{1n}$ et $S_{21}$, $S_{22}$,..., $S_{2n}$), à partir desquelles on peut séparer par filtrage les signaux d'amplitude ($R_{L1}$ ou $R_{L2}$).

3. Procédé suivant la revendication 1, caractérisé par le fait qu'à partir des tensions sinusoïdales modulées en amplitude ($S_1$, $S_2$), on obtient respectivement une tension sinusoïdale intégrée et modulée en amplitude ($\overline{S}_1$, $\overline{S}_2$), et que les tensions sinusoïdales modulées en amplitude ($S_1$, $S_2$) et les tensions sinusoïdales intégrées et modulées en amplitude ($\overline{S}_1$, $\overline{S}_2$) sont élevées au carré et sont additionnées pour former un signal somme ($S_{1S}$ ou $S_{2S}$), à partir duquel le signal d'amplitude ($R_{L1}$ ou $R_{L2}$) est produit par formation de la racine carrée.

4. Procédé suivant la revendication 1, caractérisé par le fait que respectivement une tension sinusoïdale intégrée modulée en amplitude ($\overline{S}_1$, $\overline{S}_2$) est obtenue à partir des tensions sinusoïdales modulées en ampli-

tude ($S_1$, $S_2$), que la tension sinusoïdale modulée en amplitude ($S_1$, $S_2$) et la tension sinusoïdale intégrée modulée en amplitude ($\overline{S}_1$, $\overline{S}_2$) sont respectivement redressées et que ces tensions sinusoïdales redressées ($|S_1|$, $|\overline{S}_1|$ ou $|S_2|$, $|\overline{S}_2|$) peuvent être envoyées à un analyseur vectoriel (74 ou 76), qui forme, à partir de là, un signal d'amplitude redressé ($|R_{L1}|$ ou $|R_{L2}|$), qui est converti en le signal d'amplitude ($R_{L1}$ ou $R_{L2}$).

5. Montage pour la mise en oeuvre du proccédé suivant la revendication 1, comportant un résolveur (2), qui est alimenté, côté rotor, par une tension d'excitation en forme de cosinus ($u_R$), qui est produite par un générateur de fonction (4), caractérisé par le fait que les sorties du résolveur et une autre sortie du générateur de fonction (4) sont connectées à un montage de démodulation (6), dont les sorties sont reliées à un montage (8) servant à produire une tension ($u_{DK}$) proportionnelle à la vitesse de rotation, et qui contient, pour chaque sortie du résolveur, un générateur de courbes caractéristiques (112, 114), en aval duquel est branché un circuit différentiateur (116, 118), les sorties des circuits différentiateurs (116, 118) étant connectées d'une part directement et d'autre part respectivement par l'intermédiaire d'un inverseur (122, 124), à un multiplexeur (120), en aval duquel est branché un convertisseur analogique/numérique, des signaux de commande, qui dépendent de la position du rotor, pouvant être envoyés aux entrées d'adresses du multiplexeur (120), et que les sorties du résolveur sont reliées à un montage (10) servant à produire un signal de position du rotor ou d'angle de rotation ($R_{Li}$), le montage (10) étant relié côté sortie d'une part à un circuit de calcul (12) et d'autre part au montage (8) servant à produire une tension ($u_{DK}$) proportionnelle à la vitesse de rotation, tandis que les signaux de commande ($u_{StM}$) produits dans une logique de décodage de ramification qui dépendent de la position du rotor et indiquent dans quelle plage angulaire est situé le rotor, peuvent être envoyées au montage (8) indiqué en dernier lieu.

6. Montage suivant la revendication 5, caractérisé par le fait que le montage de démodulation (6) contient, pour chaque sortie du résolveur, un intégrateur (18, 20), un déphaseur (14, 16), un multiplexeur (22, 24) et un dispositif de filtre (26, 28), le déphaseur (14, 16) étant raccordé côté entrée d'une part par l'intermédiaire de l'intégrateur (18, 20) et d'autre part directement à la sortie du résolveur, tandis que ses n sorties sont reliées au multiplexeur (22, 24), dont la sortie est raccordée au dispositif de filtre (26, 28).

7. Montage suivant la revendication 5, caractérisé par le fait que le montage de démodulation (6) possède, pour chaque sortie du résolveur, un intégrateur (46, 48), deux multiplicateurs (42, 50; 44, 52), un additionneur (54, 56) et un dispositif d'extraction de racine carrée (58, 60), le premier multiplicateur (42, 44) étant raccordé directement et le second multiplicateur (50, 52) au moyen d'un intégrateur (46, 48) à la sortie du résolveur, tandis que les sorties des deux multiplicateur (42, 50; 44, 52) sont reliées à l'additionneur (54, 56), qui est raccordé, côté sortie, au circuit d'extraction de racine carrée (58, 60).

8. Montage suivant la revendication 5, caractérisé par le fait que le dispositif de démodulation (6) contient, pour chaque sortie du résolveur, un intégrateur (66, 68), deux dispositifs de représentation de valeurs absolues (62, 70; 64, 72), un analyseur vectoriel (74, 76) et un convertisseur (78, 80), le premier dispositif de formation de valeur absolue (62, 64) étant raccordé directement et le second dispositif de formation de valeur absolue (70, 72) au moyen de l'intégrateur (66, 68) à la sortie du résolveur, tandis que les deux dispositifs de formation de valeurs absolues (62, 70; 64, 72) sont raccordés, côté sortie, à l'analyseur vectoriel (74, 76), en aval duquel est branché le convertisseur (78, 80).

$S_1 = K \cdot \hat{u} \cdot \cos\omega t \cdot \sin\alpha$

$R_{L1} = K \cdot \hat{u} \cdot \sin\alpha$

$R_{L2} = K \cdot \hat{u} \cdot \cos\alpha$

$S_2 = K \cdot \hat{u} \cdot \cos\omega t \cdot \cos\alpha$

$u_R = \hat{u} \cdot \cos\omega t$

$u_{StMR}$

$|S_{RL12}|$

$u_{StM}$

$u_{DK}$

$u_{D6}$

$u_\alpha$

FIG 1

$S_1$

$S_{11}$

$S_{12}$

$R_{L1M}$

$R_{L1}$

$S_{1(n-1)}$

$S_{1n}$

$S_1 = K \cdot \hat{u} \cdot \cos\omega t \cdot \sin\alpha$

$u_{StMR}$

$m$

$S_2$

$S_{21}$

$S_{22}$

$R_{L2M}$

$R_{L2}$

$S_{2(n-1)}$

$S_{2n}$

$S_2 = K \cdot \hat{u} \cdot \cos\omega t \cdot \cos\alpha$

FIG 2

11

$S_1 = K \cdot \hat{u} \cdot \cos\omega t \cdot \sin\alpha$

$S_{1S} = K^2 \cdot \hat{u}^2 \cdot \sin^2\alpha$

$R_{L1} = K \cdot \hat{u} \cdot \sin\alpha$

$S_2 = K \cdot \hat{u} \cdot \cos\omega t \cdot \cos\alpha$

$S_{2S} = K^2 \cdot \hat{u}^2 \cdot \cos^2\alpha$

$R_{L2} = K \cdot \hat{u} \cdot \cos\alpha$

FIG 3

$u_R = \hat{u} \cdot \cos\omega t$

$u_{StMR}$

FIG 5

$S_1 = K \cdot \hat{u} \cdot \cos\omega t \cdot \sin\alpha$

$S_1$ 62 $|S_1|$

74

$|R_{L1}|$

78

$R_{L1} = K \cdot \hat{u} \cdot \sin\alpha$

66 $\overline{S_1}$ 70 $|\overline{S_1}|$

$S_2 = K \cdot \hat{u} \cdot \cos\omega t \cdot \cos\alpha$

$S_2$ 64 $|S_2|$

76

$|R_{L2}|$

80

$R_{L2} = K \cdot \hat{u} \cdot \cos\alpha$

68 $\overline{S_2}$ 72 $|\overline{S_2}|$

**FIG 4**

10

92

96

$|R_{L1}|$ 100 $R_{LD}$ 102 $R_{LDA}$ 104 106 12 $R_{Ld}$

A/D

$R_{L1} = K \cdot \hat{u} \cdot \sin\alpha$ +

$|R_{L2}|$

0,5

$u_{StM}$

$R_{L2} = K \cdot \hat{u} \cdot \cos\alpha$

$R_{L10}$

$|S_{RL12}|$

98

108 $R_{L12}$ 110

94

$R_{L20}$

**FIG 6**

EP 0 478 540 B1

FIG 7

14

$S_1$

$S_1 = K \cdot \hat{u} \cdot \cos\omega t \cdot \sin\alpha$   $\overline{S}_1 = K \cdot \hat{u} \cdot \sin\omega t \cdot \sin\alpha$

$\alpha$

**FIG 8**

$S_2$

$S_2 = K \cdot \hat{u} \cdot \cos\omega t \cdot \cos\alpha$   $\overline{S}_2 = K \cdot \hat{u} \cdot \sin\omega t \cdot \cos\alpha$

$\alpha$

**FIG 9**

$S_{1n}$

$\alpha$

**FIG 10**

$S_{2n}$

$\alpha$

**FIG 11**

$R_{L1M}$

$\alpha$

**FIG 12**

$R_{L2M}$

$\alpha$

**FIG 13**

$R_{L1}$

$K \cdot \hat{u} \cdot \sin\alpha$

$\alpha$

**FIG 14**

$R_{L2}$

$K \cdot \hat{u} \cdot \cos\alpha$

$\alpha$

**FIG 15**

FIG 16

FIG 17

FIG 18

FIG 19

FIG 20

FIG 21

FIG 22

FIG 23

FIG 24

FIG 25

FIG 26